# DEMANDE DE BREVET EUROPEEN

(11) **EP 4 105 922 A1**
(43) Date de publication de la demande: **21.12.2022**
(21) Numéro de dépôt: 22172886.8
(22) Date de dépôt: 12.05.2022
(51) Int. Cl.: G09G 5/08, G06F 3/01, B64F 5/10

(54) **PROCÉDÉ DE FABRICATION D'UNE PIÈCE RÉELLE PERMETTANT DE VISUALISER AU MOINS UN CRITÈRE D'ACCEPTATION EN FONCTION D'UN POINT DE LA PIÈCE CIBLÉ**

(30) Priorité: 14.06.2021 FR 2106218
(71) Demandeur: Airbus Operations SAS, 31060 Toulouse (FR)
(72) Inventeur: ROGER, Dominique, 31700 BLAGNAC (FR); CHEREAU, Franck, TOULOUSE (FR)
(74) Mandataire: Fantin, Laurent

(57) **Abrégé**

L'invention a pour objet un procédé de fabrication d'une pièce réelle permettant de visualiser au moins un critère d'acceptation en ciblant un point de la pièce réelle (28) avec un pointeur (26) d'un dispositif de réalité augmentée, le procédé comprenant :
- une étape de détermination d'une matrice de passage pour convertir des coordonnées d'un point réel situé dans un deuxième repère en coordonnées d'un point virtuel situé dans un premier repère et correspondant au point réel,
- une étape de détermination des coordonnées dans le premier repère d'un point virtuel associé au pointeur (26) grâce à la matrice de passage,
- une étape de détermination si le point virtuel associé au pointeur (26) appartient à une zone de critère (16) de la pièce virtuelle, et
- si c'est le cas, une étape d'affichage d'au moins un critère d'acceptation (32) de la zone de critère (16) à laquelle appartient le point virtuel associé au pointeur (26), et
- une étape de traitement de la non-conformité en fonction du critère d'acceptation affiché afin de rendre la pièce réelle acceptable.

## Description

La présente demande se rapporte à un procédé de fabrication d'une pièce réelle permettant de visualiser au moins un critère d'acceptabilité en fonction d'un point de la pièce ciblé. Dans le domaine aéronautique, lors de la conception d'une pièce, il peut être établi, pour certaines zones, des critères d'acceptation pour traiter d'éventuelles non-conformités présentes dans ces zones à l'issue du procédé de fabrication afin de rendre la pièce acceptable. Compte tenu du nombre de zones présentant des critères d'acceptation et du nombre de pièces d'un aéronef, les critères d'acceptation représentent un volume important de données. Selon un mode opératoire, lors d'une opération d'inspection qualité d'une pièce, un opérateur doit analyser chaque non-conformité détectée afin de déterminer comment elle doit être traitée. A cet effet, il doit détecter la non-conformité, déterminer la zone dans laquelle elle est située et retrouver, parmi un grand nombre de données, les critères d'acceptation associés à cette zone.

L'étape de détermination de la zone dans laquelle est située la non-conformité peut s'avérer problématique dans le cas d'une pièce de grandes dimensions, complexe et/ou sans référentiel visuel.

L'étape de recherche des critères d'acceptation associés à la zone dans laquelle est située la non-conformité détectée s'avère généralement fastidieuse compte tenu du volume des données dans lesquelles il convient de chercher.

Le document US10740987 décrit un dispositif de réalité augmentée permettant de visualiser des informations relatives à des non-conformités présentes sur un objet, comme par exemple un fuselage d'un aéronef, qui sont visibles depuis une caméra.

Lors d'une étape préalable, les non-conformités ont été identifiées et répertoriées dans une base de données.

L'opérateur qui souhaite voir apparaître les non-conformités visibles dans une zone à inspecter et leurs informations, utilise un ordinateur portable équipé d'une caméra, d'un système destiné à scanner l'objet ainsi que d'un écran de visualisation. A l'aide de son ordinateur portable, l'opérateur filme l'objet ou une partie de l'objet. La scène filmée est affichée sur l'écran. Simultanément, le système destiné à scanner constitue un nuage de points à partir desquels une application établit un modèle virtuel de l'objet visualisé dans un repère virtuel et détermine la position et l'orientation de la caméra.

A partir de ces informations, une application positionne dans le repère virtuel les points correspondant aux non-conformités présentes sur l'objet réel, détermine l'ensemble des points visibles sur l'image affichée à partir de la position et de l'orientation de la caméra puis affiche en superposition les informations relatives aux non-conformités pour l'ensemble des points visibles sur la scène visible sur l'écran.

Ce dispositif est relativement complexe et nécessite de reconstituer un modèle virtuel à partir d'un nuage de points. Il est relativement peut précis et ne permet pas d'isoler les données relatives à une seule non-conformité notamment si la scène visualisée comprend un grand nombre de non-conformités.

La présente invention vise à remédier à tout ou partie des inconvénients de l'art antérieur.

A cet effet, l'invention a pour objet un procédé de fabrication d'une pièce réelle présentant au moins une non-conformité, ladite pièce réelle correspondant à une pièce virtuelle définie dans un premier repère et comportant au moins une zone de critère, chaque zone de critère étant définie dans le premier repère et comportant au moins un critère d'acceptation.

Selon l'invention, le procédé comprend :
- une étape de visualisation de la pièce réelle avec un dispositif de réalité augmentée configuré pour afficher un pointeur en superposition de la pièce réelle et déterminer des coordonnées du pointeur dans un deuxième repère,
- une étape de détermination d'une matrice de passage pour convertir des coordonnées d'un point réel situé dans le deuxième repère en coordonnées d'un point virtuel situé dans le premier repère et correspondant au point réel,
- une étape de positionnement du pointeur de manière à ce qu'il cible la non-conformité,
- une étape de détermination des coordonnées dans le premier repère d'un point virtuel associé au pointeur à partir de la matrice de passage et des coordonnées dans le deuxième repère du pointeur,
- une étape de détermination si le point virtuel associé au pointeur appartient à une zone de critère,
- si c'est le cas, une étape d'affichage d'au moins un critère d'acceptation de la zone de critère à laquelle appartient le point virtuel associé au pointeur,
- une étape de traitement de la non-conformité en fonction du critère d'acceptation affiché afin de rendre la pièce réelle acceptable.

Le procédé de l'invention permet d'automatiser la sélection et l'affichage des critères d'acceptation d'une zone de critère dans laquelle est située une non-conformité.

Selon une autre caractéristique, chaque zone de critère comprend au moins un ensemble de points virtuels auxquels s'applique chaque critère d'acceptation de la zone de critère. En complément, lors de l'étape de détermination si le point virtuel associé au pointeur appartient à une zone de critère, les coordonnées dans le premier repère du point virtuel associé au pointeur sont comparées aux coordonnées des points virtuels de chaque ensemble de points virtuels de chaque zone de critère afin de déterminer si ce point virtuel appartient à un de ces ensembles de points virtuels et à une zone de critère.

Selon une autre caractéristique, l'étape de détermination de la matrice de passage consiste à déterminer des coordonnées d'au moins trois points virtuels de calibration dans le premier repère, pour chaque point virtuel de calibration dans le premier repère correspondant à un point réel de calibration dans le deuxième repère, à déterminer des coordonnées dans le deuxième repère pour chaque point réel de calibration puis à déterminer la matrice de passage à partir des coordonnées de chaque point virtuel de calibration dans le premier repère et celles de chaque point réel de calibration dans le deuxième repère.

Selon une autre caractéristique, les coordonnées dans le deuxième repère de chaque point réel de calibration sont déterminées en ciblant, tour à tour, avec le pointeur chacun des points réels de calibration.

Selon une autre caractéristique, une représentation de la pièce virtuelle est affichée superposée à la pièce réelle.

Selon une autre caractéristique, le ou les critères d'acceptation sont affichés en fonction d'une position statique du pointeur.

Selon une autre caractéristique, le ou les critères d'acceptation affichés évoluent en fonction de la position en temps réel du pointeur mobile dans le deuxième repère.

Selon une autre caractéristique, au moins une image de la pièce réelle, sur laquelle sont visibles le pointeur pointant une non-conformité ainsi qu'au moins un critère d'acceptation de la zone de critère dans laquelle est situé le point virtuel associé au pointeur, est prise.

D'autres caractéristiques et avantages ressortiront de la description de l'invention qui va suivre, description donnée à titre d'exemple uniquement, en regard des dessins annexés parmi lesquels :
- La figure 1 est une vue en perspective d'une maquette virtuelle d'un aéronef,
- La figure 2 est une représentation schématique d'une pièce virtuelle comportant au moins une zone de critère illustrant un mode de réalisation de l'invention,
- La figure 3 est une vue en perspective d'un opérateur équipé d'un équipement de réalité augmentée visualisant une pièce réelle sur laquelle est présente une non-conformité illustrant un mode de réalisation de l'invention,
- La figure 4 est une représentation du champ de vision d'un opérateur vu à travers un équipement de réalité augmentée lors d'une étape de calibration illustrant un mode de réalisation de l'invention, et
- La figure 5 est une représentation du champ de vision d'un opérateur vu à travers un équipement de réalité augmentée lors d'une étape d'affichage de critères d'acceptation associés à la zone dans laquelle est présente une non-conformité illustrant un mode de réalisation de l'invention.

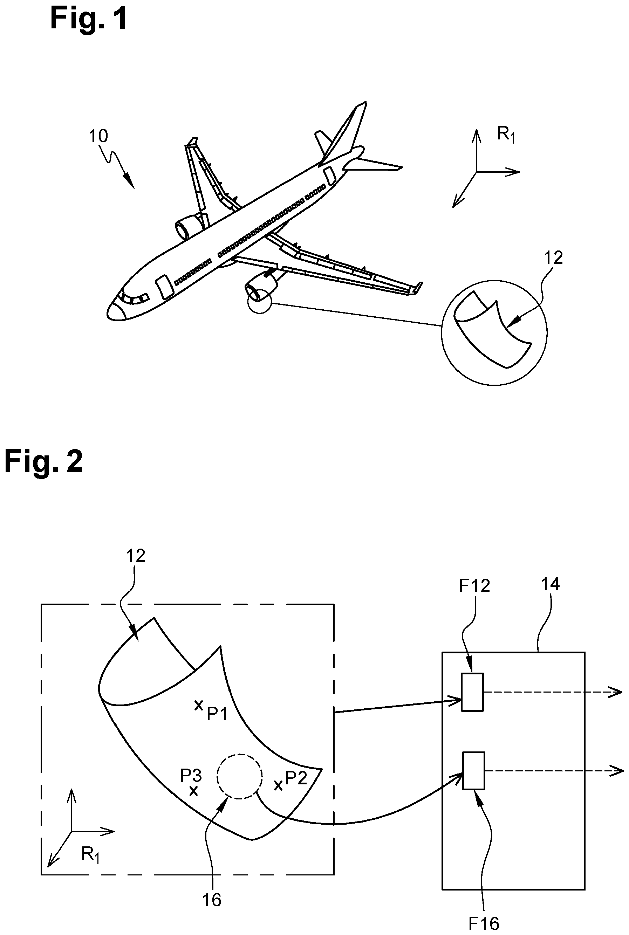

Sur la figure 1, on a représenté en 10 une maquette virtuelle d'un aéronef dans un premier repère R1. Cette maquette virtuelle comprend une multitude de pièces virtuelles 12 ou d'assemblages de pièces.

Pour la présente demande, on entend par une pièce une seule pièce ou plusieurs pièces comme un assemblage de pièces par exemple.

Au moins une pièce virtuelle 12 est définie dans au moins un fichier numérique de pièce F12. La maquette virtuelle 10 de l'aéronef comprend une multitude de fichiers numériques de pièce F12. Les différents fichiers numériques de pièce F12 peuvent être stockés dans un dispositif de stockage 14. Ces différents fichiers numériques de pièce F12 peuvent être exportés et/ou convertis en tout fichier compatible avec un équipement de réalité augmentée.

Comme illustré sur la figure 2, à partir du fichier numérique de pièce F12, il est possible de visualiser, à l'aide d'un logiciel de visualisation adapté au fichier, une représentation de la pièce virtuellel2 dans le premier repère R1. Chaque point virtuel de la pièce virtuelle 12 présente des coordonnées exprimées dans le premier repère R1.

A titre d'exemple, la pièce virtuelle 12 correspond à une partie d'une entrée d'air d'une nacelle d'un aéronef. Bien entendu, l'invention n'est pas limitée à cette pièce.

La maquette virtuelle 10 de l'aéronef comprend au moins une zone de critère 16 présentant au moins un critère d'acceptation. Généralement, la maquette virtuelle 10 comprend plusieurs zones de critère 16 présentant chacune au moins un critère d'acceptation.

Selon une configuration, une pièce virtuelle 12 présente une ou plusieurs zones de critère 16. Chaque zone de critère 16 est définie dans un fichier de zone F16 comportant chaque critère d'acceptation de la zone de critère 16 considérée ainsi qu'au moins une coordonnée de zone permettant de délimiter et de positionner la zone de critère 16 dans le premier repère R1. Ainsi, chaque zone de critère 16 comprend au moins un ensemble de points virtuels auxquels s'applique chaque critère d'acceptation de la zone de critère 16.

Les différents fichiers de zone F16 peuvent être stockés dans un dispositif de stockage qui peut être le même que celui des fichiers numériques de pièce F12. Ces différents fichiers de zone F16 peuvent être exportés et/ou convertis en tout fichier compatible avec un équipement de réalité augmentée.

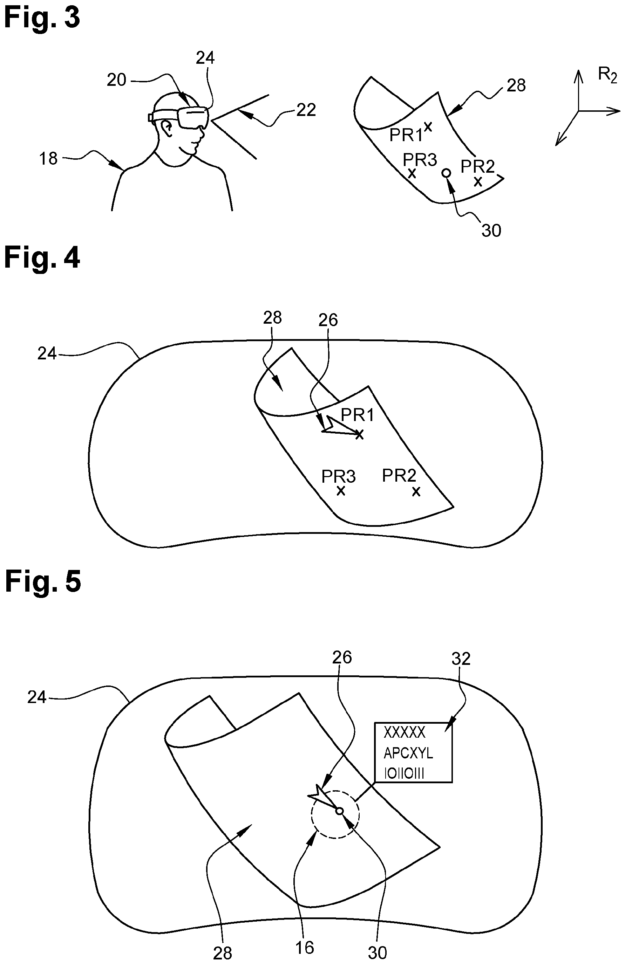

Pour la mise en œuvre d'un procédé de visualisation d'au moins un critère d'acceptation, comme illustré sur la figure 3, un opérateur 18 est équipé d'un équipement de réalité augmentée 20, comme des lunettes par exemple, configuré pour afficher dans le champ de vision 22 de l'opérateur 18 au moins une information.

Cet équipement de réalité augmentée 20 est configuré pour afficher sur un écran 24, dans le champ de vision 22 de l'opérateur 18, au moins un pointeur 26.

L'équipement de réalité augmentée 20 comprend au moins un logiciel configuré pour afficher le pointeur 26 et déterminer les coordonnées du pointeur 26 dans un deuxième repère R2 associé à un environnement réel.

Comme illustré sur les figures 3 et 4, une pièce réelle 28 correspondant à la pièce virtuelle 12 est visualisée par l'opérateur 18 avec le dispositif de réalité augmentée, le pointeur 26 s'affichant sur l'écran 24 en superposition de la pièce réelle 28. Cette pièce réelle 28 peut comprendre au moins une non-conformité 30 à l'issue de son procédé de fabrication.

La pièce réelle 28 est identique à la pièce virtuelle 12. A chaque point réel de la pièce réelle 28 correspond un point virtuel de la pièce virtuelle 12.

Le fichier numérique de pièce F12 de la pièce virtuelle 12 correspondant à la pièce réelle 28 ainsi que le fichier de zone F16 de chaque zone de critère 16 présente sur la pièce virtuelle 12 sont convertis ou exportés en des fichiers exploitables par le logiciel implémenté dans l'équipement de réalité augmentée 20.

Selon un mode opératoire, un procédé de visualisation d'au moins un critère d'acceptation comprend une phase de détermination d'une matrice de passage pour convertir des coordonnées d'un point réel situé dans le deuxième repère R2 en coordonnées d'un point virtuel situé dans le premier repère R1 et correspondant au point réel. En complément, une matrice de passage inverse est déterminée afin de convertir des coordonnées d'un point virtuel situé dans le premier repère R1 en coordonnées d'un point réel situé dans le deuxième repère R2 et correspondant au point virtuel.

Cette phase de détermination de la matrice de passage comprend une étape de sélection d'au moins trois points virtuels de calibration P1, P2, P3 situés, dans le premier repère R1, sur la maquette virtuelle 10 de l'aéronef et une étape de détermination des coordonnées de chaque point virtuel de calibration P1, P2, P3 dans le premier repère R1. Comme illustré sur la figure 2, les points virtuels de calibration P1, P2, P3 sont positionnés sur la pièce virtuelle 12.

Pour chaque point virtuel de calibration P1, P2, P2, la pièce réelle 28 présente un point réel de calibration PR1, PR2, PR3 qui correspond au dit point virtuel de calibration P1, P2, P3. Les points virtuels de calibration P1, P2, P2 sont des points remarquables et choisis de manière à ce que les points réels de calibration PR1, PR2, PR3 correspondants soient facilement identifiables sur la pièce réelle 28.

La phase de détermination de la matrice de passage comprend également une étape de détermination des coordonnées dans le deuxième repère R2 de chaque point réel de calibration PR1, PR2, PR3 de la pièce réelle 28. Selon un mode opératoire, l'équipement de réalité augmentée 20 est utilisé pour réaliser cette étape, le pointeur 26 ciblant, tour à tour, chacun des points réels de calibration PR1, PR2, PR3.

Connaissant les coordonnées de chaque point virtuel de calibration P1, P2, P3 dans le premier repère R1 et celles de chaque point réel de calibration PR1, PR2, PR3 dans le deuxième repère R2, la matrice de passage peut être déterminée.

Cette phase de détermination de la matrice de passage peut être réalisée une seule fois pour chaque pièce réelle 28. Elle n'a pas besoin d'être répétée entre deux non-conformités 30.

La phase de détermination de la matrice de passage étant achevée, pour chaque non-conformité 30 détectée, le procédé de visualisation d'au moins un critère d'acceptation comprend les étapes suivantes :
- de positionnement du pointeur 26 de l'équipement de réalité augmentée 20 de manière à ce qu'il cible la non-conformité 30,
- de détermination des coordonnées dans le deuxième repère R2 du pointeur 26 pointé sur la non-conformité 30 détectée,
- de détermination des coordonnées dans le premier repère R1 d'un point virtuel associé au pointeur 26 à partir de la matrice de passage et des coordonnées dans le deuxième repère R2 du pointeur 26 pointé sur la non-conformité 30,
- de détermination si ce point virtuel appartient à une zone de critère 16,
- si c'est le cas, d'affichage d'au moins un critère d'acceptation 32 de la zone de critère 16 à laquelle appartient le point virtuel associé au pointeur 26, comme illustré sur la figure 5.

Pour déterminer si un point virtuel appartient à une zone de critère 16, les coordonnées dans le premier repère R1 du point virtuel associé au pointeur 26 sont comparées aux coordonnées des points virtuels de chaque ensemble de points virtuels de chaque zone de critère 16 afin de déterminer si ce point virtuel appartient à un de ces ensembles de points virtuels et in fine à une zone de critère.

Selon un premier mode opératoire, ces différentes étapes sont réalisées en statique, les critères d'acceptation étant affichés en fonction d'une position statique du pointeur 26 ciblant la non-conformité 30 détectée.

Selon un deuxième mode opératoire, ces différentes étapes sont réalisées en dynamique, les critères d'acceptation affichés évoluant en fonction de la position en temps réel du pointeur 26 mobile dans le deuxième repère R2.

Les critères d'acceptation 32 peuvent être affichés en fonction de la position du pointeur 26, sans que nécessairement une non-conformité ne soit détectée. Ainsi, le pointeur 26 peut cibler tout autre élément, comme une fixation ou un orifice par exemple.

Ainsi, les coordonnées dans le premier repère R1 du point virtuel associé au pointeur 26 sont déterminées, en temps réel, à partir de la matrice de passage et des coordonnées dans le deuxième repère R2 du pointeur 26. En suivant, si le point virtuel associé au pointeur 26 appartient à une zone de critère 16 alors les critères d'acceptation 32 de cette zone de critère 16 sont affichés.

Pour faciliter la détection des non-conformités, la représentation de la pièce virtuelle 12 est affichée sur l'écran 24 de l'équipement de réalité augmentée 20, superposée à la pièce réelle 28 correspondante en faisant correspondre les points réels de calibration PR1, PR2, PR3 et les points virtuels de calibration P1, P2, P3 et/ou en utilisant la matrice de passage ou la matrice de passage inverse. En complément, les coordonnées du pointeur 26 sont affichées sur l'écran 24.

Pour faciliter le traitement d'une non-conformité 30, au moins une image de la pièce réelle 28, sur laquelle sont visibles le pointeur 26 pointant la non-conformité 30 détectée ainsi que les critères d'acceptation 32 de la zone de critère 16 dans laquelle est situé le point virtuel associé au pointeur 26, est prise.

L'équipement de réalité augmentée 20 peut être configuré pour saisir une telle image.

Le procédé de l'invention permet d'automatiser la sélection et l'affichage des critères d'acceptation d'une zone de critère dans laquelle est située une non-conformité. Il permet également de simplifier la détermination de la position d'une non-conformité et la recherche des critères d'acceptation associés à la non-conformité.

## Revendications

1. Procédé de fabrication d'une pièce réelle présentant au moins une non-conformité, ladite pièce réelle (28) correspondant à une pièce virtuelle (12) définie dans un premier repère (R1) et comportant au moins une zone de critère (16), chaque zone de critère (16) étant définie dans le premier repère (R1) et comportant au moins un critère d'acceptation, **caractérisé en ce que** le procédé comprend :
- une étape de visualisation de la pièce réelle (28) avec un dispositif de réalité augmentée (20) configuré pour afficher un pointeur (26) en superposition de la pièce réelle (28) et déterminer des coordonnées du pointeur (26) dans un deuxième repère (R2),
- une étape de détermination d'une matrice de passage pour convertir des coordonnées d'un point réel situé dans le deuxième repère (R2) en coordonnées d'un point virtuel situé dans le premier repère (R1) et correspondant au point réel,
- une étape de positionnement du pointeur (26) de manière à ce qu'il cible la non-conformité,
- une étape de détermination des coordonnées dans le premier repère (R1) d'un point virtuel associé au pointeur (26) à partir de la matrice de passage et des coordonnées dans le deuxième repère (R2) du pointeur (26),
- une étape de détermination si le point virtuel associé au pointeur (26) appartient à une zone de critère (16),
- si c'est le cas, une étape d'affichage d'au moins un critère d'acceptation (32) de la zone de critère (16) à laquelle appartient le point virtuel associé au pointeur (26),
- une étape de traitement de la non-conformité en fonction du critère d'acceptation affiché afin de rendre la pièce réelle acceptable.

2. Procédé de fabrication selon la revendication 1, **caractérisé en ce que** chaque zone de critère (16) comprend au moins un ensemble de points virtuels auxquels s'applique chaque critère d'acceptation de la zone de critère (16) et **en ce que** lors de l'étape de détermination si le point virtuel associé au pointeur (26) appartient à une zone de critère (16), les coordonnées dans le premier repère (R1) du point virtuel associé au pointeur (26) sont comparées aux coordonnées des points virtuels de chaque ensemble de points virtuels de chaque zone de critère (16) afin de déterminer si ce point virtuel appartient à un de ces ensembles de points virtuels et à une zone de critère (16).

3. Procédé de fabrication selon la revendication 1 ou 2, **caractérisé en ce que** l'étape de détermination de la matrice de passage consiste à déterminer des coordonnées d'au moins trois points virtuels de calibration (P1, P2, P3) dans le premier repère (R1), pour chaque point virtuel de calibration (P1, P2, P3) dans le premier repère (R1) correspondant à un point réel de calibration (PR1, PR2, PR3) dans le deuxième repère (R2), à déterminer des coordonnées dans le deuxième repère (R2) pour chaque point réel de calibration (PR1, PR2, PR3) puis à déterminer la matrice de passage à partir des coordonnées de chaque point virtuel de calibration (P1, P2, P3) dans le premier repère (R1) et celles de chaque point réel de calibration (PR1, PR2, PR3) dans le deuxième repère (R2).

4. Procédé de fabrication selon la revendication précédente, **caractérisé en ce que** les coordonnées dans le deuxième repère (R2) de chaque point réel de calibration (PR1, PR2, PR3) sont déterminées en ciblant, tour à tour, avec le pointeur (26) chacun des points réels de calibration (PR1, PR2, PR3).

5. Procédé de fabrication selon la revendication précédente, **caractérisé en ce qu'**une représentation de la pièce virtuelle (12) est affichée superposée à la pièce réelle (28).

6. Procédé de fabrication selon l'une des revendications précédentes, **caractérisé en ce que** le ou les critères d'acceptation (32) sont affichés en fonction d'une position statique du pointeur (26).

7. Procédé de fabrication selon l'une des revendications 1 à 5, **caractérisé en ce que** le ou les critères d'acceptation (32) affichés évoluent en fonction de la position en temps réel du pointeur (26) mobile dans le deuxième repère (R2).

8. Procédé de fabrication selon l'une des revendications précédentes, **caractérisé en ce qu'**au moins une image de la pièce réelle (28), sur laquelle sont visibles le pointeur (26) pointant une non-conformité (30) ainsi qu'au moins un critère d'acceptation (32) de la zone de critère (16) dans laquelle est situé le point virtuel associé au pointeur (26), est prise.
